# EUROPEAN PATENT APPLICATION

(11) **EP 0 731 059 A1**
(43) Date of publication of application: **11.09.1996**
(21) Application number: 96301612.6
(22) Date of filing: 08.03.1996
(51) Int. Cl.: C01B 39/02, C11D 3/12

(54) **Zeolites**

(30) Priority: 10.03.1995 GB 9504912
(71) Applicant: INDUSTRIAL ZEOLITE (UK) LIMITED, Grays, Essex RM17 5DU (GB)
(72) Inventor: Bolland, John Charles Beaumont, Lynn, Cheshire WA13 0TS (GB); Seagrave, Michael John, Chigwell Row, Essex IG7 6ES (GB); Skidmore, Peter Ralph, Brentwood, Essex CM14 4AT (GB)
(74) Representative: Daniels, Jeffrey Nicholas

(57) **Abstract**

The present invention relates to a method of preparing a zeolite of reduced water content, which method comprises heating a zeolite source material, comprising hydrated or partially hydrated zeolite having a water content of more than 5% by weight, under drying conditions controlled so as to avoid overdrying of any part of the zeolite thereby to form a zeolite having a water content of up to 15% by weight and a calcium exchange capacity of at least 200mg calcium carbonate removed from solution per g of zeolite expressed on an anhydrous basis.

## Description

The present invention relates to the manufacture of zeolites, which retain their detergent builder capacities and acquire useful desiccant properties.

Aluminosilicates, particularly dried crystalline aluminosilicates are well known as desiccants and molecular sieves. Aluminosilicates, and particularly sodium aluminosilicates having aluminium to silicon ratios of about 1:1 are also well known as detergency builders.

Fully hydrated crystalline zeolite 4A has the formula Na₁₂Al₁₂Si₁₂O₄₈.27H₂O corresponding to the empirical formula NaAlSiO₄.2.25H₂O which has a calculated water content of 22.2%. This is the preferred zeolite for use as a detergent builder and contains a typical moisture (water) range, determined by the loss on ignition at 800°C, of 18-22%, more particularly 19-21% in the material used in detergent formulations.

P type zeolites are known with Si:Al ratios of about 1:1 to about 2.5:1 and of these only those with Si:Al ratios of about 1:1 are suitable for use as detergent builders because of low calcium uptake of the lower aluminium ratio materials. These materials generally have the empirical formula NaAlSiO₄.2.5H₂O, which has a calculated water (moisture) content of 24.1%.

It is known that zeolites can be dried to moisture contents below that required by the empirical formula and that where so dried they will act as desiccants (moisture absorbers). The use of zeolites as dusting powders in a process for increasing the bulk density of particulate detergents is also known.

GB 1429143 discloses a detergent composition which contains an aluminosilicate ion exchange material having a calcium ion exchange capacity of at least 200mg.eq./g. It is suggested that the aluminosilicate ion exchange material may have a broad moisture content range of from 10% to 20% by weight. Water contents of 18% to 20% by weight are preferred so as to optimise the builder properties of the aluminosilicates and the aluminosilicates are prepared using a relatively low temperature.

WO 95/02672 discloses a process for making percarbonate containing detergent compositions. A partially hydrated crystalline sodium aluminosilicate having a moisture content of less than 15% is added to detergent powder particles containing percarbonate. The partially hydrated crystalline aluminosilicate is primarily used for its dusting agent properties for the purpose of improving the stability of the percarbonate in the detergent compositions. No calcium exchange data are given for the aluminosilicate dusting agents.

The present applicants have found that, by using controlled drying techniques, zeolites can be produced which have good desiccant properties whilst retaining their calcium exchange capacities. When used in detergent compositions, these zeolites can contribute active material to the detergent compositions as well as acting as a desiccant to improve the handling properties of the compositions.

Accordingly, in one aspect, the present invention provides a method of preparing a zeolite of reduced water content. The method comprises heating a zeolite source material, comprising hydrated or partially hydrated zeolite and having a water content of more than 5% by weight, under drying conditions controlled so as to avoid overdrying of any part of the zeolite. The zeolite product formed thereby has a water content of up to 15% by weight and a calcium exchange capacity of at least 200mg calcium carbonate removed from solution per g of zeolite expressed on an anhydrous basis. Preferably, the water content of the zeolite product is at least 5% by weight and more preferably less than 10% by weight. Various types of zeolite may be used as the source material, for example Zeolite A, X, P or MAP. The zeolite source material preferably comprises zeolite 4A. Preferably, the zeolite product has a calcium exchange capacity of at least 240mg calcium carbonate removed from solution per g of zeolite.

Preferably, the zeolite source material may consist essentially of hydrated or partially hydrated zeolite and, optionally, an additional component or components which do not affect substantially the calcium exchange properties of the dried zeolite. Such components include active ingredients (such as builders) and fillers. Examples of the listed types of components are as follows. As active ingredients there may be included alkali metal carbonates such as soda ash, sodium bicarbonate and sodium sesquicarbonate, phosphates, polyphosphates, pyrophosphates and silicates. As fillers there may be included sodium sulphate and diatomaceous earths. As a builder there may be included sodium phosphate.

Preferably, the zeolite source material comprises 10-100 wt % hydrated or partially hydrated zeolite and 90-0 wt % of additional component(s).

Preferably, the zeolite source material is not in an agglomerated form and comprises an unagglomerated hydrated or partially hydrated zeolite.

Throughout the present specification, all water content values refer to values determined by the loss on ignition at 800°C.

Whilst the temperature of heating may fall anywhere in the range 40°C to 800°C, the heating conditions must be controlled so as to avoid overdrying of any part of the zeolite because the applicants have found that localised overdrying of the zeolite, especially to a water content of around 4.7% by weight or less, results in an irreversible change in the detergent builder properties of the zeolite. Control of the heating conditions may be achieved by an appropriate combination of the parameters of heating temperature, time of heating, degree of agitation or extent of exposure of surface area of zeolite source material, rate of gas flow over zeolite source material, and pressure. A number of combinations are discussed in further detail below. As a general rule, the higher the temperature, the shorter the time required to achieve the desired zeolite water content. Decreasing the exposure time of the zeolite to high temperature before either localised or general irreversible change in the zeolite structure is caused reduces deterioration in the desiccant and/or builder properties of the zeolite. Equally, the higher the rate of gas flow or the lower the pressure, the shorter the time required to achieve the desired zeolite water content. In addition, a relative high degree of agitation or a relative great extent of exposure of surface area of the zeolite source material tends to allow a reduction in the time required and/or an increase in the permissible temperature which may be used without causing overdrying to take place.

In one embodiment of the invention, a method is provided in which the drying conditions are controlled by heating the zeolite source material under subatmospheric pressure. A batch drying process may be carried out by drying the material for a time sufficient to bring the water content of the zeolite to the desired amount. The zeolite source material may be heated on trays. Alternatively, the material may be heated in a vertical (i.e. inclined >45° to the horizontal) drum fitted with agitator paddles or a screw lifter, or in a horizontal (i.e. <45° to the horizontal) rotating drum, preferably fitted with lifters. Any of these devices may, when properly constructed, be used at sub-atmospheric pressure, by which means the drying temperature and/or drying time may be reduced. Typically, the water content of the product is in the range 5% to 15% by weight, preferably less than 10% by weight. Unless the trays are fitted with some sort of agitation device that turns the material over, care must be taken to avoid localised over-drying because of inhomogeneity in the drying process. Typically, drying processes carried out at sub-atmospheric pressures would be operated in the range 200 to 500 mbar and at temperatures in the range 40°C to 300°C, preferably 60°C to 80°C. Batch drying at atmospheric pressure is most conveniently carried out on trays or in a vertical drum dryer fitted with an agitator or screw lifter.

In the method involving a vertical drum dryer, a drum is fitted with means for agitating the zeolite material, such as agitator paddles for agitating the material horizontally or a screw lifter for agitating the material vertically. Heat may be applied to the walls and/or the bottom of the drum by a heater comprising one or more heating coils or one or more heating pads.

Advantageously, the drying conditions are controlled by agitating the zeolite source material during heating in a heating device. This method is easier to control than a batch method in the absence of agitation and the device may be heated to a temperature in the range 200°C to 800°C. This also enables the method to be carried out more quickly than the lower temperature methods.

Suitable devices for operation of the method in this higher temperature range include a fluid bed dryer, a horizontal rotating drum dryer, a belt dryer, a heated screw conveyor and a vertical drum dryer incorporating an agitator or screw lifter.

In the method involving the vertical drum dryer at higher temperature, the surface temperature in contact with the zeolite material is typically in the range 200°C to 800°C, preferably 400°C to 500°C. Drying in the drum dryer is relatively easy to control and gives a good product as described above.

In the method involving a fluid bed dryer, heated gas such as air acts to agitate the zeolite material by providing both a fluidizing and drying medium. Typically, the heated gas is supplied to the fluid bed dryer at a temperature in the range 200°C to 800°C.

Optionally, additional gas, such as air, which may be pre-heated or unheated is passed through the dryer in co-current or counter current mode. The supply rate of this additional gas can be adjusted together with the temperature of the heated gas so as to control the drying of the zeolite product.

Heating in accordance with the method of the present invention preferably takes place in air, exhaust gases, an inert gas or mixtures thereof. Furthermore, heating preferably takes place in the absence of ammonia.

In the method involving a horizontal rotating drum dryer, heated gas, such as air is used as the heating and drying medium and is passed in co-current or counter current mode through a rotary drum. Preferably, the rotary drum is fitted with lifters and more preferably, a louvred rotary drum is provided. Typically, heated gas is provided at the inlet of the rotary drum dryer in the temperature range 200°C to 800°C and inlet and outlet temperatures are adjusted in combination with the rate of gas flow and material throughput so as to provide a zeolite product of the desired water content.

In the method involving a belt dryer, zeolite material is moved through a drying tunnel by means of a conveyor belt whilst heated gas such as air is provided in co-current or counter current mode to heat and dry the material. Preferably, the tunnel is provided with agitation means which may be either stationary or moveable with respect to the drying tunnel so that the zeolite is further agitated on its passage through the tunnel. The heated gas is typically provided at a temperature of 200°C to 800°C and the inlet and outlet temperatures of the drying tunnel are adjusted with the flow rate of the gas through the tunnel and material throughput so that the zeolite product has the desired water content.

In the method involving a heated screw conveyor, the screw and/or the walls of the device are heated to give a surface temperature in contact with the zeolite material in the range 200°C to 800°C, preferably 400°C to 500°C. Optionally, the device is ventilated.

The heating temperature and rate of flow of the product are adjusted so as to provide a zeolite product with the desired water content.

With the exception of the vertical drum dryer method, each of the above methods incorporating agitation of the zeolite source material can be operated on a continuous basis. Zeolite source material can be supplied continuously to the device in question and the product material is supplied continuously from the device. The drying conditions are most easily controlled in continuous processes where the zeolite is moved, with agitation, through the drying device and the rate of throughput (residence time) of the zeolite, heating temperature and gas flows can all be optimised to give products having the desired properties. The possibility of localised overdrying is effectively eliminated and, because such devices may employ temperatures in the range 200°C to 800°C, the residence time can be reduced and productivity increased.

In all cases where moving gases come into contact with powdered zeolite the exhaust gases are preferably filtered to remove entrained particulates which, depending on their moisture contents when recovered may be either fed back into the drying process or into the final product.

In an advantageous embodiment a two-stage process is employed in which the zeolite source material is first produced in a drying stage. In this drying stage an aqueous zeolite slurry comprising a total solids content in the range 10% to 80% by weight is dried to form the zeolite source material which is then supplied in a second stage directly and continuously to the device for controlled drying. As an alternative, the zeolite source material is supplied in a one-stage process directly to the device as a slurry. Preferably, however, the zeolite source material has a water content in the range 15% to 25% by weight, generally around 20% by weight. Thus, the zeolite source material may be prepared by any method conventionally used to dry powders, either as a batch process, or continuously.

Zeolite obtainable from the above methods may be used as a desiccant, as a detergent builder or as an additive for a detergent composition exploiting both desiccant and builder properties. The zeolite may be added to the detergent compositions as part or all of the zeolite content in procedures and quantities determined by the detergent manufacturer in accordance with the manufacturer's application.

The invention will now be described in further detail, by way of example only, with reference to the following Examples.

### Example 1

350 kg of zeolite 4A with a moisture content between 19 and 21% as determined by the loss on ignition at 800°C were placed in a drum fitted with electric heating pads and a vertical lift screw agitator. The wall temperature of the drum was increased from ambient to 500°C and held at this temperature until the moisture content of the batch was reduced to between 7 and 7.5%. The dried material was then discharged from the drum. The total time taken to treat this batch was three hours from starting to load the drum to finishing discharge.

### Example 2

A second 350 kg batch of zeolite 4A was placed in the still warm drum immediately after discharge of the first batch and the procedure described in Experiment 1 repeated. The total time for this batch from starting to load the drum to end of discharge was one hour and forty-five minutes.

Dried zeolites produced in accordance with Example 1 and Example 2 were compared with normal production zeolites prepared conventionally and having a water content of around 20% by weight. The dried zeolites were found to have a calcium exchange capacity (CaEC), in mg calcium carbonate removed from solution by 1g zeolite (anhydrous basis), of 272 (cv 3.4). The CaEC for the production zeolites was 269 (cv 2.9). The particle size of the two zeolites were also compared. The dried zeolites had a mean particle size of 4.33µm (cv 7.7). Thus, the particle size of dried zeolites according to the present invention is comparable to that of normal production zeolites.

### Example 3

Zeolite samples were dried in a vertical drum heater in accordance with Examples 1 and 2 above and the dry product evaluated in respect of its ability to take up moisture. X-ray diffraction studies were also performed on the dried product comparing it with a normal production zeolite prepared conventionally and a zeolite sample prepared by drying normal production zeolite in a furnace at 800°C for one hour without controlling the conditions to avoid overdrying, thereby to form an anhydrous product.

The results of these studies are presented in Tables 1 to 4.

Referring to Table 1, the water content of a sample of dried zeolite 4A is shown with respect to time of exposure under ambient temperature and relative humidity. The rate of uptake of water is found to be related to the water deficiency of the material.

**Table 1**

| Moisture Uptake of Zeolite 4A | |
|---|---|
| Time | Moisture |
| 0 hours | 11.53% |
| 1 hour | 14.75% |
| 2 hours | 16.76% |
| 3½ hours | 18.29% |
| 5 hours | 19.35% |
| 6½ hours | 19.75% |
| 10 hours | 19.85% |

What has been discovered is that the water content of detergent zeolites can be reduced to relatively low levels without affecting the basic aluminosilicate structure as shown by X-ray diffraction and that zeolites so treated will not only act as desiccants, regaining their original structure, but will also retain their detergent builder properties whereas the basic aluminium silicate structure of zeolites dried beyond a critical point undergoes progressive irreversible changes and that the detergent builder properties are lost. These changes are shown in Tables 2, 3 and 4 which compare a normal production zeolite 4A with one dried in accordance with the invention to a moisture content of 8.1% and with a fully anhydrous sample not dried in accordance with the invention. Tables 2 and 3 show that there are insignificant changes in d-spaces, albeit accompanied by major changes in peak height ratios, for the normal and partially dried samples whereas Tables 2 and 4 show that a complete change in structure has occurred on full dehydration.

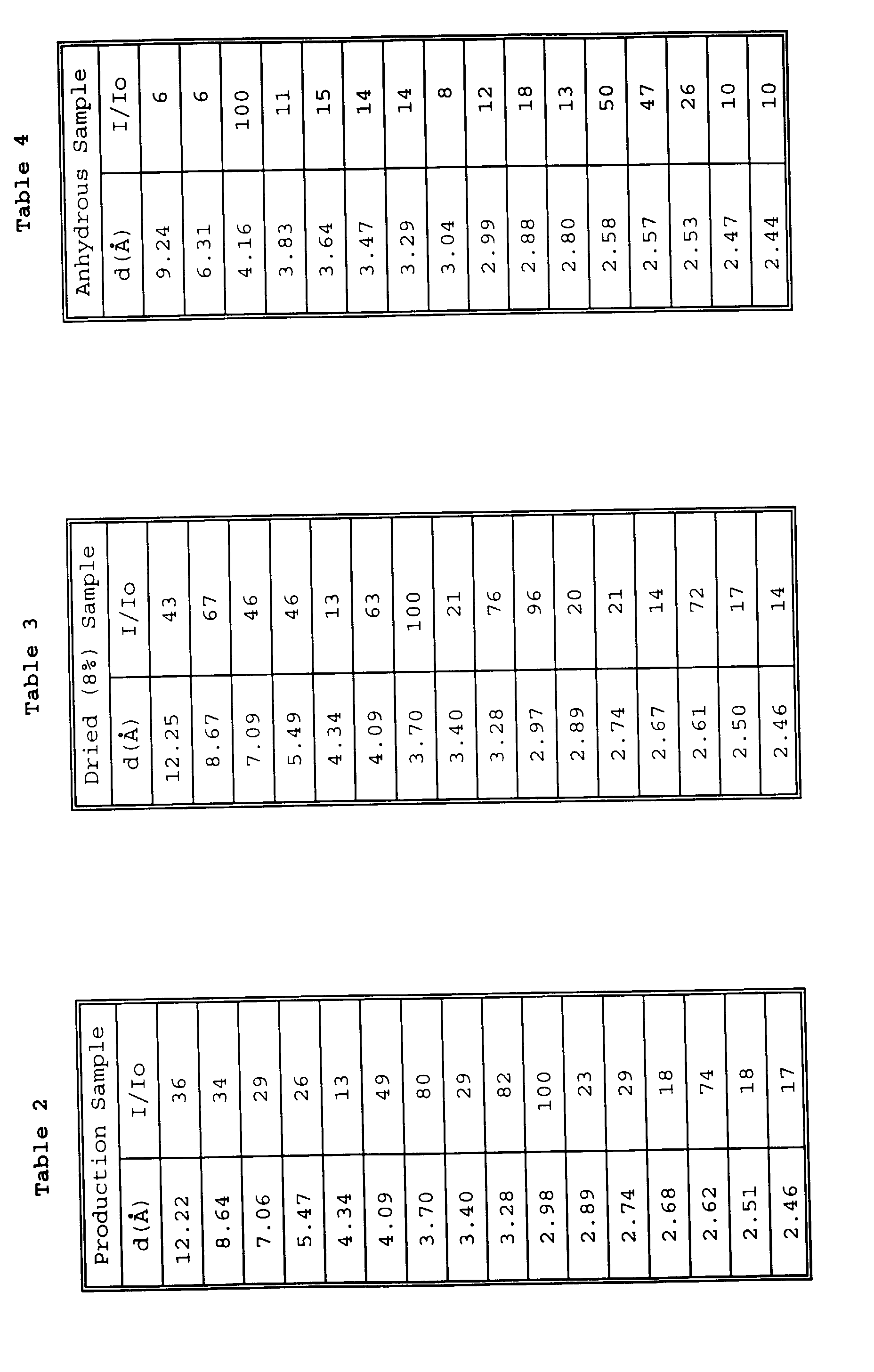

It has further been discovered that the point at which irreversible changes in zeolites become apparent depends on both the water content of the zeolite and the temperature at which the zeolite material is heated. For example, slow removal of water at temperatures below about 400°C with agitation permits the water content of the zeolite 4A powder to be reduced to about 1% by weight, without loss of basic structural integrity. In contrast, the irreversible changes brought about by the rapid removal of water at temperatures above about 400°C, even with agitation, become apparent when the moisture content of the material falls to below 4.7%. Furthermore, it has been discovered that localised overdrying can cause irreversible changes to occur in part of the material being dried whilst leaving the remainder of the material unaffected thereby reducing the net detergent building capacity of the otherwise apparently properly dried zeolite.

**Use of the Product**
1. The zeolite having desiccant properties may be used either as part or all of the total aluminosilicate in a detergent composition. This causes a rapid, controllable reduction in the "free" water content of the composition thereby assisting in the production of a detergent mix with improved agglomeration and/or handling characteristics.
2. The zeolite having desiccant properties may be used as a "dusting" powder in the final stages of the preparation of a detergent powder. This leads to a rapid, temporary drying of the surface of the particles of the detergent without impairing the beneficial "dusting" effect of the powder, thereby affording a temporary, symbiotic improvement in the handling characteristics of the detergent.
3. The zeolite so prepared may be used as a desiccant and/or ion exchanger, either alone or in admixture for non-detergent purposes. Zeolites prepared in this way and used only as desiccants and not contaminated by substances other than water may be recycled indefinitely. Providing overheating is avoided the progressive reduction is performance seen with conventional desiccant zeolites is either greatly reduced or does not occur at all.

## Claims

1. A method of preparing a zeolite of reduced water content, which method comprises heating a zeolite source material, comprising hydrated or partially hydrated zeolite having a water content of more than 5% by weight, under drying conditions controlled so as to avoid overdrying of any part of the zeolite thereby to form a zeolite having a water content of up to 15% by weight and a calcium exchange capacity of at least 200mg calcium carbonate removed from solution per g of zeolite expressed on an anhydrous basis.

2. A method according to claim 1, wherein the zeolite is formed with a water content of at least 5% by weight.

3. A method according to claim 1 or claim 2, wherein the zeolite is formed with a water content of less than 10% by weight.

4. A method according to any one of claims 1 to 3, wherein the zeolite is formed with a calcium exchange capacity of at least 240mg calcium carbonate removed from solution per g of zeolite expressed on an anhydrous basis.

5. A method according to any one of claims 1 to 4, wherein the zeolite source material comprises zeolite 4A.

6. A method according to any one of the preceding claims, wherein the drying conditions are controlled by heating the zeolite source material under subatmospheric pressure.

7. A method according to any one of the preceding claims, wherein the drying conditions are controlled by heating the zeolite source material in a device at a temperature in the range 40°C to 300°C.

8. A method according to claim 7, wherein the device comprises a vacuum oven, a vertical drum heater fitted with an agitator or screw lifter, or a horizontal rotating drum heater optionally fitted with lifters or louvres.

9. A method according to any one of claims 1 to 6, wherein the drying conditions are controlled by agitating the zeolite source material while heating in a device at a temperature in the range 200°C to 800°C.

10. A method according to claim 9, wherein the device comprises a vertical drum heater fitted with an agitator or screw lifter.

11. A method according to claim 9, wherein the device comprises a fluid bed dryer, a belt dryer optionally fitted with a device to agitate the material on the belt, or a heated screw conveyor or a horizontal rotating drum heater, optionally fitted with lifters or louvres.

12. A method according to claim 11, wherein the zeolite source material is supplied continuously to the device.

13. A method according to claim 12, wherein the zeolite source material is supplied directly to the device from a drying stage, which drying stage comprises drying an aqueous zeolite slurry including 10% to 80% by weight of total solids to form the zeolite source material.

14. A method according to any one of the preceding claims, wherein the zeolite source material has a water content in the range 15% to 25% by weight.
